# EUROPÄISCHE PATENTSCHRIFT

(11) **EP 2 062 669 B1**
(45) Veröffentlichungstag und Bekanntmachung des Hinweises auf die Patenterteilung: **18.11.2015**
(21) Anmeldenummer: 08105630.1
(22) Anmeldetag: 22.10.2008
(51) Int. Cl.: B23B 31/00, B23B 31/06, B23B 31/117, B23B 51/00, B25D 17/06, B25D 17/08

(54) **Schlagwerkzeugaufnahme und Handwerkzeugmaschine**
Striking tool chuck and hand tool machine
Mandrin pour outil de percussion et machine-outil

(30) Priorität: 23.11.2007 DE 102007056441
(43) Veröffentlichungstag der Anmeldung: 27.05.2009
(73) Patentinhaber: HILTI Aktiengesellschaft, 9494 Schaan (LI)
(72) Erfinder: Cycon, Alexander, 75228, Ispringen (DE); Mössnang, Franz, 86899, Landsberg (DE)
(74) Vertreter: Hilti Aktiengesellschaft Corporate Intellectual Property

(56) Entgegenhaltungen:
- BE-A- 462 666
- DE-A1- 2 448 377
- JP-A- 8 071 955
- JP-A- 2003 053 681
- US-A- 3 934 428
- US-A- 4 058 176

## Beschreibung

Die Erfindung bezeichnet eine Schlagwerkzeugaufnahme gemäß dem Oberbegriff des Anspruchs 1, zur axial begrenzt beweglichen

Aufnahme eines zumindest teilweise längs einer Schlagachse von einem Schläger einer Handwerkzeugmaschine schlagend angetriebenen Schlagwerkzeug, insbesondere eines Bohrhammers oder Meisselhammers, und eine Handwerkzeugmaschine mit dieser Schlagwerkzeugaufnahme.

Eine solche Schlagwerkzeugaufnahme und eine solche Handwerkzeugmaschine sind aus der JP 08 071955 A bekannt.

Üblicherweise weisen Schlagwerkzeugaufnahmen zur axial begrenzt beweglichen Aufnahme eines längs einer Schlagachse von einem (koaxial eingreifenden) Schläger einer Handwerkzeugmaschine schlagend angetriebenen Schlagwerkzeugs eine Schlagwerkzeugführung und eine Schlagwerkzeugverriegelung auf. Eine allfällige Drehmomentübertragung erfolgt über Drehmitnahmeflächen, welche sich zumeist parallel zur Schlagachse erstrecken, insbesondere über Drehmitnahmestege, welche drehformschlüssig in Nuten des Einsteckendes eingreifen.

Nach der US4614241 weist die Schlagwerkzeugaufnahme eine Schlagwerkzeugführung und eine Verriegelungsklinke auf, die einen radialen Verriegelungsbund des sechskantig prismatischen Einsteckendes hinterfasst.

Nach der DE2618596 ist die Schlagwerkzeugverriegelung über Verriegelungskörper in Form von Kugeln ausgebildet, welche in entsprechende Ausnehmungen in Form von axial beidseitig geschlossenen Verriegelungsnuten des Einsteckendes des Schlagwerkzeugs eingreifen.

Nach der JP200353681 sind zwischen den einander zugeordneten Stirnenden des Döppers und des Einsteckendes zwei koaxial ineinander angeordnete Spiralfedern angeordnet, um ein Eindringen von Staub zu vermeiden.

Der in die Schlagwerkzeugaufnahme eindringende Gesteinsstaub führt insbesondere in Verbindung mit notwendigen Schmierstoffen zu einer Schleifpaste, welche die Schlagwerkzeugführung, die Schlagwerkzeugverriegelung und die allfälligen Drehmitnahmestege einer hohen Verschleissbeanspruchung aussetzt.

Nach der JP8071955 ist bei einem Meisselhammer zwischen dem Maschinengehäuse und der Schlagwerkzeugaufnahme ein Schlauchgeflecht in Form einer "Fingerfalle" angeordnet, die einen axial begrenzt beweglichen Döpper umfasst. Ein auch als Einziehstrumpf oder "chinesische Fingerfalle" (engl. "Chinese finger trap") bekanntes Schlauchgeflecht weist axial schräg verlaufende Fasern auf, welche sich bei axialer Dehnung koaxial zusammenzieht.

Die Aufgabe besteht in der Realisierung einer Schlagwerkzeugaufnahme mit verringerter Verschleissbeanspruchung, eines entsprechend zugeordneten Schlagwerkzeugs und einer Handwerkzeugmaschine mit dieser Schlagwerkzeugaufnahme. Ein weiterer Aspekt besteht in der Verminderung der Anzahl der Bauteile der Schlagwerkzeugaufnahme.

Die Aufgabe wird im Wesentlichen durch die Merkmale des Anspruchs 1 gelöst. Vorteilhafte Weiterbildungen ergeben sich aus den Unteransprüchen.

So weist eine Schlagwerkzeugaufnahme zur axial begrenzt beweglichen Aufnahme eines zumindest teilweise längs einer Schlagachse von einem Schläger einer Handwerkzeugmaschine schlagend antreibbaren Schlagwerkzeugs ein Schlauchgeflecht mit axial schräg verlaufenden Fasern auf, welches sich zumindest teilweise axial über das werkzeugseitige Stirnende des Schlägers erstreckt und dieses umfänglich umfasst und in welchem ein schlägerseitiges Stirnende des Einsteckendes des Schlagwerkzeugs im Inneren aufnehmbar ist.

Durch das Umfassen der einander zugewandten Stirnenden des Einsteckendes und des Schläger durch ein Schlauchgeflecht mit axial schräg verlaufenden Fasern wird vermittelt über die Haftreibung zwischen diesen Stirnenden eine "Fingerfalle" ausgebildet, welche nur eine axial begrenzte Bewegung der Stirnenden zulässt. Zudem übertragen die axial schräg verlaufenden Fasern über die Haftreibung das Drehmoment eines optional drehend angetriebenen Schlägers. Somit sind Schmierstoffe gerade nicht notwendig und zudem schirmt das Schlauchgeflecht den Aufschlagbereich weitgehend staubdicht ab. Das Schlauchgeflecht vereinigt somit in sich in einem Bauteil die Verriegelungsmittel und die Drehübertragungsmittel. Zudem ist als Verschleissteil das bezüglich des Umfangs des Einsteckendes relativ toleranzunempfindliche Schlauchgeflecht selbst einfach austauschbar. Im Leerschlagfall mit weiter axialer Versetzung des Schlagwerkzeugs erfolgt durch die Reibung der Fasern des Schlauchgeflechts zudem eine Leerschlagdämpfung.

Vorteilhaft besteht das Schlauchgeflecht aus einem Drahtgeflecht, wie bspw. einen Stahldrahtgeflecht oder einem schlauchförmigen Metallmaschendraht, wodurch dieser robust und hochverschleissfest ausgebildet ist.

Alternativ vorteilhaft besteht das Schlauchgeflecht aus einem Fasergeflecht, wie bspw. Kohlefaserstrumpf, Aramidfaserstrumpf, Glasfaserstrumpf oder Fasergemischen daraus, wodurch mit hoher Haftreibung zu Stahl und hoher Faserzugfestigkeit hohe Verriegelungskräfte aufgebracht und hohe Drehmomente übertragen werden können. Alternativ vorteilhaft besteht das Schlauchgeflecht aus einem faserverstärktem Werkstoff, wie bspw. endlos-glasfaserverstärktem elastischem Kunststoff, wodurch dies als endlos-Halbzeug (Rohr) über Pultrudieren technologisch einfach herstellbar und von diesem ablängbar ist.

Vorteilhaft liegt der axiale Flechtwinkel der Fasern des Schlauchgeflechts im Bereich von 30° bis 60°, optional bei 45°, wodurch hohe Drehmomente übertragen werden können. Vorteilhaft sind im Schlauchgeflecht beidseitig axial schräg umlaufende Fasern vorhanden, deren Anteil optional gleich gross ist, wodurch die Übertragbarkeit von Drehmomenten in beiden Richtungen gleich ist.

Vorteilhaft erstreckt sich das Schlauchgeflecht koaxial im Inneren einer Aufnahmehülse, wodurch ein radialer Aussenanschlag für das Schlauchgeflecht ausgebildet ist.

Eine Handwerkzeugmaschine weist vorteilhaft einen längs der Schlagachse geführten Schläger auf, der koaxial in die Schlagwerkzeugaufnahme eindringt, wobei das werkzeugseitige Stirnende des Schlägers konisch radial verdickt ist, wodurch bei der Rückschlagbewegung die Haftreibung zum Schlauchgeflecht erhöht wird.

Diese radiale Verdickung des Schlägers kann jeweils ohne Einschränkung der Allgemeinheit zumindest stückweise zum freien Stirnende hin kegelförmig linear, degressiv oder progressiv stetig sowie einfach oder mehrfach axial versetzt in Form eines Rotationskörpers ausgebildet sein.

Die Erfindung wird bezüglich eines vorteilhaften Ausführungsbeispiels näher erläutert mit:
Fig. 1 als Handwerkzeugmaschine mit Teillängsschnitt
Fig. 2 als Schlagwerkzeugaufnahme im Längsschnitt
Fig. 3 als Fig. 2 mit alternativem Einsteckende
Fig. 4 als nicht zur Erfindung gehörenden, alternativen Schlagwerkzeugaufnahme im Längsschnitt
Fig. 5 als Ausschnitt von Fig. 4 mit alternativem Schlauchgeflecht und Bodenteil

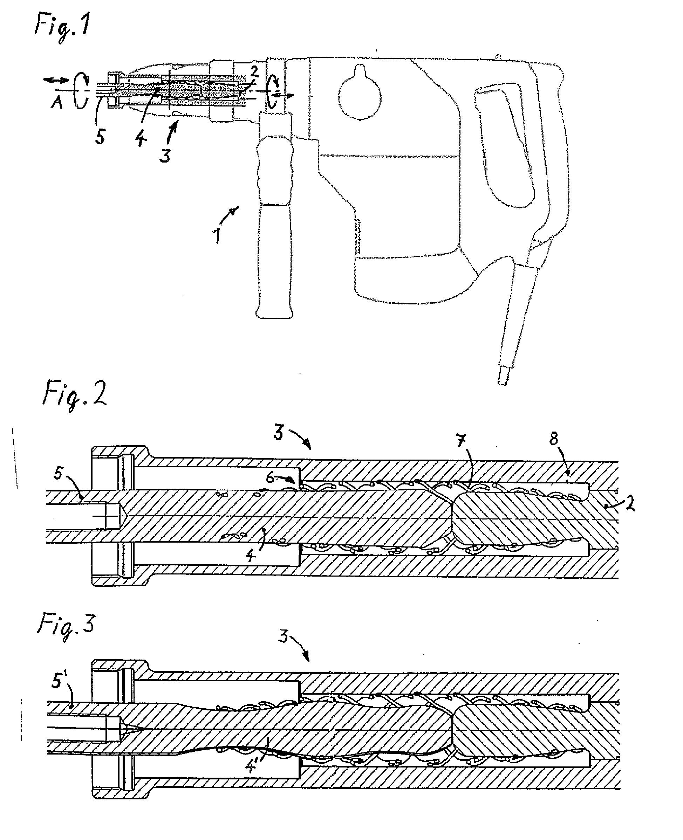

Nach Fig. 1 weist eine Handwerkzeugmaschine 1 einen längs einer Schlagachse A geführten Schläger 2 auf, der koaxial in eine Schlagwerkzeugaufnahme 3 eindringt, in welcher das Einsteckende 4 eines nicht vollständig dargestellten Schlagwerkzeugs 5 in Form eines Bohrmeissels axial begrenzt beweglich geführt gelagert ist und von dem drehenden Schläger 2 drehend angetrieben wird.

Nach Fig. 2 weist die Schlagwerkzeugaufnahme 3 ein Schlauchgeflecht 6 aus einem schlauchförmig vermaschten Metallmaschendraht mit im axialen Flechtwinkel von 45° beidseitig zu gleichen Anteilen axial schräg umlaufenden Fasern 7 aus Stahldraht auf, welches sich teilweise axial über das werkzeugseitige Stirnende des Schlägers 2 erstreckt und dieses umfänglich umfasst sowie teilweise axial über das schlägerseitige Stirnende des aufgenommenen Einsteckendes 4 des Schlagwerkzeugs 5 umfänglich umfassend erstreckt. Das lose auf den Schläger 2 aufgeschobene Schlauchgeflecht 6 (schematische Darstellung) erstreckt sich koaxial im Inneren einer Aufnahmehülse 8, wodurch unter Zwischenlage des Schlauchgeflechts 6 eine axiale Führung für das Einsteckende 4 und den Schläger 2 ausgebildet ist (die Radialmasse wurden überzeichnet dargestellt). Sowohl das Einsteckende 4 als auch der Schläger 2 sind im vom Schlauchgeflecht 6 umfassten axialen Bereich des freien Stirnendes konisch radial verdickt, in der Darstellung je kegelförmig (linear wachsend).

Nach Fig. 3 ist im Unterschied zu Fig. 2 in der Schlagwerkzeugaufnahme 3 ein alternatives Schlagwerkzeug 5' aufgenommen, dessen Einsteckende 4' in Form eines Rotationskörpers zwischen Verjüngungen zweifach axial versetzt verdickt ist.

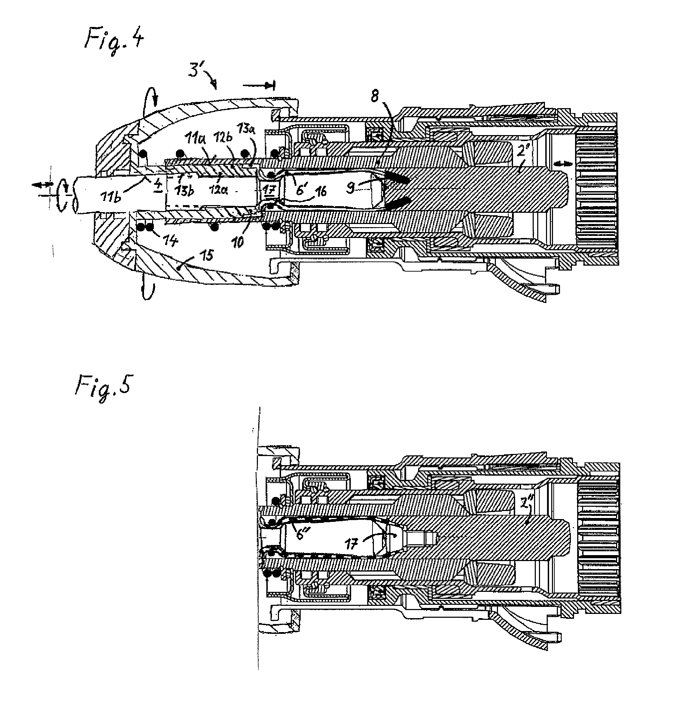

Nach Fig. 4 ist im Unterschied zu Fig. 2 bei einer alternativen, nicht zur Erfindung gehörenden Schlagwerkzeugaufnahme 3' das Schlauchgeflecht 6' in Form eines +/-45° Kohlefasergeflechts selbst in einem Bodenteil 9 aus Kupfer eingeprsst, das in dem Schläger 2' verlötet ist. Zudem weist die Schlagwerkzeugaufnahme 3' ein Entriegelungselement 10 auf, das zweckentsprechend manuell zur Entriegelung betätigt das Schlauchgeflecht 6' axial zusammendrückt. Dazu greift das axial versetzbare Entriegelungselement 10 koaxial in die Aufnahmehülse 8 ein und bildet sowohl radial innere als auch radial äussere Führungsflächen 11a, 11b aus, wodurch das aufgenommene Einsteckende 4' mittelbar über diese Führungsflächen 11a, 11b in der Aufnahmehülse 8 geführt ist. Das Entriegelungselement 10 bildet sowohl radial innere als auch radial äussere Drehmitnahmeflächen 12a, 12b aus, welche formschlüssig in zugeordnete Drehmitnahmenuten 13a, 13b der Aufnahmehülse 8 und des Einsteckendes 4' eingreifen. Das Entrieglungselement 10 ist mit einer gegenüber mit eine Feder 14 federnd druckvorgespannt axial versetzbaren, äusseren Entrieglungskappe 15 verbunden, die sich mit dem Einsteckende 4' mitdreht, auf welche aber der Schlagimpuls des Schlägers 2' praktisch nicht übertragen wird. Am offenen Ende des Schlauchgeflechts 6' ist radial aussen ein Radialfederring 16 vorhanden, der das Schlauchgeflecht 6' in eine zugeordnete Radialnut 17 im Einsteckende 4' hinein drückt.

Nach Fig. 5 ist im Unterschied zu Fig. 4 bei einem alternativen, nicht zur Erfindung behörenden Schlauchgeflecht 6" in Form eines +/-45° endlos-glasfaserverstärkten Silikongummischlauchs dieser direkt über eine Senkkopfschraube 17 in einem Senkloch des Schlägers 2" lösbar haftkraftschlüssig eingeklemmt.

## Patentansprüche

1. Schlagwerkzeugaufnahme (3) zur axial begrenzt beweglichen Aufnahme eines zumindest teilweise längs einer Schlagachse (A) von einem Schläger (2) einer Handwerkzeugmaschine (1) schlagend antreibbaren Schlagwerkzeugs (5, 5') mit einem Schlauchgeflecht (6) mit axial schräg verlaufenden Fasern (7), **dadurch gekennzeichnet, dass** das Schlauchgeflecht (6) sich zumindest teilweise axial über das werkzeugseitige Stirnende des Schlägers (2) erstreckt und dieses umfänglich umfasst, und dass in diesem Schlauchgeflecht (6) ein schlägerseitiges Stirnende des Einsteckendes (4, 4') des Schlagwerkzeugs (5, 5') im Inneren aufnehmbar ist.

2. Schlagwerkzeugaufnahme nach Anspruch 1, **dadurch gekennzeichnet, dass** das Schlauchgeflecht (6) aus einem Drahtgeflecht besteht.

3. Schlagwerkzeugaufnahme nach Anspruch 1, **dadurch gekennzeichnet, dass** das Schlauchgeflecht (6) aus einem Fasergeflecht besteht.

4. Schlagwerkzeugaufnahme nach Anspruch 1, **dadurch gekennzeichnet, dass** das Schlauchgeflecht (6) aus einem faserverstärkten Werkstoff besteht.

5. Schlagwerkzeugaufnahme nach einem der Ansprüche 1 bis 4, **dadurch gekennzeichnet, dass** der axiale Flechtwinkel der Fasern (7) des Schlauchgeflechts (6) im Bereich von 30° bis 60° liegt.

6. Schlagwerkzeugaufnahme nach einem der Ansprüche 1 bis 5, **dadurch gekennzeichnet, dass** im Schlauchgeflecht (6) beidseitig axial schräg umlaufende Fasern (7) vorhanden sind.

7. Schlagwerkzeugaufnahme nach einem der Ansprüche 1 bis 6, **dadurch gekennzeichnet, dass** sich das Schlauchgeflecht (6) koaxial im Inneren einer Aufnahmehülse (8) erstreckt.

8. Handwerkzeugmaschine mit einer Schlagwerkzeugaufnahme (3) nach einem der Ansprüche 1 bis 7 und einem längs der Schlagachse (A) geführten Schläger (2), der koaxial in die Schlagwerkzeugaufnahme (3) eindringt, **dadurch gekennzeichnet, dass** das werkzeugseitige Stirnende des Schlägers (2) konisch radial verdickt ist.

## Claims

1. A chuck (3) for holding a percussion bit (5, 5') so that it has limited axial movement, said percussion bit (5, 5') being percussively driven at least partway along a striking axis (A) by a striker (2) of a hand-held power tool (1) and said chuck (3) including a hose braiding (6) with fibres (7) running diagonally in axial direction, **characterized in that** the hose braiding (6) extends at least partway in axial direction over the bit-side end of the striker (2) and surrounds its circumference, and **in that** a striker-side end of the shank (4, 4') of the percussion bit (5, 5') can be contained inside this hose braiding (6).

2. A percussion tool chuck according to Claim 1, **characterized in that** the hose braiding (6) consists of a wire braiding.

3. A percussion tool chuck according to Claim 1, **characterized in that** the hose braiding (6) consists of a fibre braiding.

4. A percussion tool chuck according to Claim 1, **characterized in that** the hose braiding (6) consists of a fibre-reinforced material.

5. A percussion tool chuck according to one of Claims 1 to 4, **characterized in that** the axial braid angle of the fibres (7) of the hose braiding (6) is in the region of 30° to 60°.

6. A percussion tool chuck according to one of Claims 1 to 5, **characterized in that** fibres (7) are present on both sides in the hose braiding (6), encircling it diagonally in axial direction.

7. A percussion tool chuck according to one of Claims 1 to 6, **characterized in that** the hose braiding (6) extends coaxially inside a chuck sleeve (8).

8. A hand-held power tool having a chuck (3) for a percussion bit according to one of Claims 1 to 7 and a striker (2) guided along the striking axis (A) which coaxially enters the percussion tool chuck (3), **characterized in that** the bit-side end of the striker (2) is conically enlarged in radial direction.

## Revendications

1. Mandrin d'outil de percussion destiné à recevoir, de manière mobile et axialement limitée, un outil de percussion (5, 5') pouvant être entraîné en percussion au moins partiellement le long d'un axe de percussion (A) par un percuteur (2) d'une machine-outil manuelle (1), comportant une tresse tubulaire (6) ayant des fibres s'étendant de manière axialement oblique (7), **caractérisé en ce que** la tresse tubulaire (6) s'étend au moins partiellement axialement au-dessus de l'extrémité avant, côté outil, du percuteur (2) et entoure celle-ci de manière circonférentielle, et **en ce qu'**à l'intérieur de cette tresse tubulaire (6) peut être reçue une extrémité avant, côté percuteur, de l'extrémité d'insertion (4, 4') de l'outil de percussion (5, 5').

2. Mandrin d'outil de percussion selon la revendication 1, **caractérisé en ce que** la tresse tubulaire (6) est constituée d'une tresse de fils.

3. Mandrin d'outil de percussion selon la revendication 1, **caractérisé en ce que** la tresse tubulaire (6) est constituée d'une tresse de fibres.

4. Mandrin d'outil de percussion selon la revendication 1, **caractérisé en ce que** la tresse tubulaire (6) est constituée d'un matériau renforcé par des fibres.

5. Mandrin d'outil de percussion selon l'une des revendications 1 à 4, **caractérisé en ce que** l'angle de tressage axial des fibres (7) de la tresse tubulaire (6) est dans une plage de 30° à 60°.

6. Mandrin d'outil de percussion selon l'une des revendications 1 à 5, **caractérisé en ce que** des fibres circonférentielles (7) axialement obliques des deux côtés sont présentes dans la tresse tubulaire (6).

7. Mandrin d'outil de percussion selon l'une des revendications 1 à 6, **caractérisé en ce que** la tresse tubulaire (6) s'étend coaxialement à l'intérieur d'une douille de mandrin (8).

8. Machine-outil manuelle comportant un mandrin d'outil de percussion (3) selon l'une des revendications 1 à 7 et un percuteur (2) guidé le long de l'axe de percussion (A), qui pénètre coaxialement dans le mandrin d'outil de percussion (3), **caractérisée en ce que** l'extrémité avant, côté outil, du percuteur (2) est radialement épaissie de manière conique.
